(19) Europäisches Patentamt
European Patent Office
Office européen des brevets

(11) EP 2 691 346 B1

# (12) FASCICULE DE BREVET EUROPEEN

(45) Date de publication et mention de la délivrance du brevet:
**23.10.2024 Bulletin 2024/43**

(21) Numéro de dépôt: **12717401.9**

(22) Date de dépôt: **28.03.2012**

(51) Classification Internationale des Brevets (IPC):
***C03C 25/30*** *(2018.01)* ***C03C 25/40*** *(2006.01)*
***C03C 25/54*** *(2006.01)* ***C03C 25/10*** *(2018.01)*
***D06M 13/00*** *(2006.01)* ***A01M 29/34*** *(2011.01)*
***D06M 15/00*** *(2006.01)* ***C03C 25/24*** *(2018.01)*
***C03C 25/26*** *(2018.01)*

(52) Classification Coopérative des Brevets (CPC):
**C03C 25/24; C03C 25/26; C03C 25/30; C03C 25/40; C03C 25/54**

(86) Numéro de dépôt international:
**PCT/FR2012/050654**

(87) Numéro de publication internationale:
**WO 2012/131255 (04.10.2012 Gazette 2012/40)**

## (54) FIL DE VERRE POURVU D'UN REVETEMENT A BASE DE POLYMERE ET ECRAN CONTENANT LEDIT FIL.

GLASGARN MIT EINER POLYMERBESCHICHTUNG UND NETZ MIT DIESEM GARN

GLASS YARN PROVIDED WITH A POLYMER COATING, AND SCREEN CONTAINING SAID YARN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.03.2011 FR 1152636**

(43) Date de publication de la demande:
**05.02.2014 Bulletin 2014/06**

(73) Titulaire: **Saint-Gobain Adfors**
**92400 Courbevoie (FR)**

(72) Inventeurs:
- **BLANCHARD, Benjamin**
  **F-95150 Taverny (FR)**
- **CHUDA, Katarzyna**
  **92600 Asnières sur Seine (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 0 170 981**
**US-A- 3 922 466**
**US-A- 3 993 837**
**US-A- 5 646 207**
**US-A1- 2002 055 313**
**US-A1- 2004 224 147**
**US-A1- 2008 292 739**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 691 346 B1

## Description

L'invention se rapporte à un fil de verre pourvu d'un revêtement à base de polymère, destiné à la fabrication d'un écran, notamment sous forme de grille, de tissu ou de tricot, utilisable en particulier en tant que moustiquaire.

Les écrans comportant un réseau de fils sont généralement disposés au niveau des fenêtres et des portes pour empêcher les insectes de pénétrer dans les habitations. La taille des mailles du réseau est adaptée pour retenir les insectes, notamment les moustiques, sans s'opposer au passage de l'air et de la lumière.

De tels écrans sont généralement fabriqués à partir d'un fil comportant un revêtement à base d'un polymère, par exemple du polychlorure de vinyle (PVC) : le fil est assemblé sous la forme qui convient (grille, tissu ou tricot), puis l'assemblage est traité dans une enceinte chauffé à une température autorisant la fusion du polymère, et refroidi à la température ambiante entraînant la solidification du polymère et la liaison des fils au niveau de leurs points de croisement.

Les écrans peuvent aussi être obtenus en réalisant un assemblage de fils (grille, tissu ou tricot), puis en le traitant avec une composition de revêtement à base de polymère, et enfin en le soumettant à un traitement thermique tel que décrit précédemment en vue de lier les fils aux points de croisement.

Toutefois, les poussières et les salissures provenant de l'environnement ambiant ont tendance à se coller sur ces écrans en obstruant tout ou partie des mailles, ce qui impose de devoir nettoyer l'écran de manière régulière.

On connaît des solutions pour limiter l'encrassement de moustiquaires et réduire ainsi le nombre de nettoyages pour une période donnée.

Une solution décrite dans CN-Y-2237104 consiste à intégrer l'écran dans un bâti et à lui associer des moyens mécaniques de nettoyage tels que des brosses.

Dans US-A1-2004/0224147, il a été proposé un écran autonettoyant se présentant sous la forme d'un maillage de fils comportant un revêtement incluant soit des particules d'oxyde de titane dotées d'une activité photocatalytique, soit des nanoparticules qui confèrent une faible énergie de surface à l'écran (la surface est dite « super-hydrophobe »).

Dans EP 0 170 981 A1, il a été proposé une composition d'ensimage pour des fibres de verre pouvant comprendre un protecteur de fibres « fiber protectorant » choisi parmi une longue liste de polymères susceptible de former un film et/ou un lubrifiant, et éventuellement un agent de couplage choisi parmi une longue liste de composés qui ne serait présent que si le caractère hydrophile des fibres limite leur compatibilité avec les polymères.

De FR-A1-2 908 137, il est également connu un procédé de traitement d'une surface organique, par exemple en PVC, visant à former une couche barrière au dessus de laquelle se trouve une couche photocatalytique à base d'oxyde de titane. Le procédé opère à la pression atmosphérique, en présence d'un gaz ionisé qui permet la formation d'une couche, en particulier en $SiO_2$, présentant une meilleure adhésion à la couche à base d'oxyde de titane.

Dans US 3 922 466 A, il est décrit des composés organosilanes contenant du soufre qui sont utilisés en tant qu'agents de couplage et retardateurs de flamme afin de lier efficacement des fils de verre et des matériaux élastomères.

La présente invention a pour but d'obtenir un fil de verre revêtu d'une couche à base de polymère qui permet notamment la fabrication d'écrans présentant une résistance améliorée aux salissures.

Ce but est atteint en ajoutant, dans le polymère formant la couche de revêtement, un silane de formule (I) suivante :

$$\begin{array}{c} R_2 \\ | \\ R_1 - Si - R_3 \\ | \\ R_4 \end{array}$$

dans laquelle

- $R_1$, $R_2$, $R_3$, identiques ou différents, représentent
  - un groupement alkyle en $C_1$-$C_6$,
  - un groupement alcényle en $C_2$-$C_6$,
  - un groupement alcynyle en $C_2$-$C_6$,
  - un groupement aryle en $C_6$-$C_{10}$,
  - un groupement hydroxyle,
  - un groupement alkoxy en $C_1$-$C_6$,
  - un groupement aryloxy en $C_6$-$C_{10}$,
  - un groupement acyloxy en $C_1$-$C_6$,
  - un groupement alkylcarbonyle en $C_2$-$C_7$,

au moins deux des groupements $R_1$, $R_2$, $R_3$ représentant un groupement hydroxyle ou un groupement alkoxy, et

- $R_4$ représente

  - un groupement renfermant au moins une fonction epoxy,
  - un groupement aryle, éventuellement substitué,
  - atome d'halogène ou un groupement portant au moins un atome d'halogène, notamment de fluor,
  - un groupement renfermant au moins une fonction aldéhyde,
  - un groupement portant au moins une fonction renfermant un atome de phosphore,
  - un groupement acryloxy ou méthacryloxy,

ledit groupement portant les fonctions précitées étant un groupement carboné en $C_1$-$C_{18}$, de préférence $C_1$-$C_8$, pouvant contenir au moins hétéroatome d'oxygène.

De préférence, les groupements $R_1$, $R_2$ et $R_3$ sont choisis parmi les groupements méthyle, éthyle, méthoxy et éthoxy.

De préférence encore, le groupement $R_4$ est :

- un groupement portant au moins une fonction epoxy en position terminale, notamment un groupement glycidoxyalkyle dans lequel le radical alkylène renferme 1 à 8 atomes de carbone, avantageusement le glycidoxypropyle,
- un groupement aryle, notamment phényle,
- un atome d'halogène ou une chaine aliphatique renfermant 1 à 9 atomes de carbone portant au moins un atome d'halogène, notamment de fluor.

Le silane particulièrement préféré est le 3-glycidoxypropyl-méthyldimethoxysilane, le 3-glycidoxypropyltrimethoxysilane, le phényltriéthoxysilane et le triéthoxyfluorosilane.

Le polymère entrant dans la constitution du revêtement est un polymère thermoplastique éventuellement à caractère élastomérique. A titre d'exemples, on peut citer les polyoléfines telles que le polyéthylène et le polypropylène, les polymères vinyliques tels que le polyacétate de vinyle, les copolymères acétate de vinyle-chlorure de vinyle, le polychlorure de vinyle, le polychlorure de vinylidène et les polymères (méth)acryliques. Le polychlorure de vinyle est préféré.

Le cas échéant, un plastifiant peut être utilisé pour conférer plus de souplesse au polymère précité. Le plastifiant est généralement choisi parmi les esters d'acide organique, de préférence contenant au moins deux groupes carboxyliques, par exemple les phtalates d'alkyle et/ou d'aryle et les adipates d'alkyle, les phosphates et les huiles végétales, notamment de soja ou de ricin, ou issues de coupes pétrolières, notamment paraffiniques, aromatiques ou naphténiques.

Les plastifiants préférés à associer au PVC sont les phtalates d'alkyle et/ou d'aryle, par exemple le di(2-éthylhexyl)phtalate, le dibutylphtalate, le dioctylphtalate, le diphénylphtalate et le phtalate de butyle et de benzyle, les adipates d'alkyle, par exemple le di(2-éthylhexyl)adipate, le dibutyladipate et le dioctyladipate, et les phosphates.

Le mélange du polymère et du plastifiant se présente sous la forme d'un plastisol ou d'une pâte.

Le mélange de polymère, de silane et éventuellement de plastifiant peut contenir en outre des additifs conventionnels, par exemple des stabilisants thermiques, des lubrifiants, des retardateurs de flamme, des pigments organiques et/ou inorganiques, des agents de glissement tels que des silicones, et des agents anti-UV qui permettent de protéger le polymère du rayonnement lumineux.

Le fil pourvu d'un revêtement à base de polymère selon l'invention peut être utilisé tel quel pour fabriquer des écrans, par exemple sous la forme de grilles, de tissus ou de tricots.

Le fil peut comprendre en outre au moins une couche supplémentaire qui se superpose à la couche de polymère précitée, laquelle couche supplémentaire permet de conférer au fil des propriétés spécifiques.

A titre d'exemples de telles couches, on peut citer :

- les couches photocatalytiques qui contiennent des particules de $TiO_2$ sous forme anatase, généralement dans une matrice de silice mésoporeuse. Le plus souvent, on associe une sous-couche barrière, notamment en silice, à la couche photocatalytique disposée entre la couche de PVC et ladite couche photocatalytique afin d'éviter la dégradation du PVC par les particules de $TiO_2$,
- les couches antistatiques, notamment obtenues par voie sol-gel, par exemple les couches d'ITO (indium - oxyde d'étain), les couches de $SnO_2$ dopées par un métal, notamment Sb, Nb, Ta ou W, et les couches de ZnO dopées ou non par Sn, Al, In, Y, Zr ou B, ainsi que les couches à base d'une matrice polymère UV-réticulable ou thermoréticulable contenant des nanoparticules d'ITO,
- les couches hydrophiles, notamment à base de silice, déposées par voie sol-gel ou par plasma atmosphérique comme décrit par exemple dans FR 2 908 137 A1,
- les couches hydrophobes et/ou oléophobes, notamment constituées d'une matrice (sous forme d'une couche ou

de billes) de silice greffée par des composés fluorés, en particulier des trialkoxyfluoroalkylsilanes, des alkylsilanes, des arylsilanes ou des hexaalkyldisilazanes.

La quantité de revêtement à base de polymère déposé sur le fil de verre représente généralement 15 à 80 % du poids total du fil revêtu, de préférence 50 à 70 % et avantageusement 55 à 65 %.

La quantité de silane déposé sur le fil de verre représente 0,5 à 15 % du poids total du revêtement, de préférence 1 à 10 % et avantageusement 3 à 7 %.

On obtient le fil conforme à l'invention en appliquant une composition renfermant le polymère et le silane sur un fil de verre renfermant une pluralité de filaments de verre.

Le fil de verre conforme à l'invention est un fil composé d'une multitude de filaments de verre (ou fil de base) ou un fil obtenu par assemblage de plusieurs fils de base en stratifils (« roving » en anglais), un fil co-mêlé composé de filaments de verre et de filaments thermoplastiques intimement mélangés ou un fil mixte constitué de fils de verre et de fils de thermoplastique assemblés. Le fil de base et les fils constitués de filaments de verre et de polyester sont préférés. Dans les fils précités, les filaments de verre sont revêtus de manière classique d'un ensimage appliqué sur ces derniers au cours de leur étirage et avant leur rassemblement sous la forme d'un ou plusieurs fils. L'ensimage permet notamment de protéger les filaments des risques d'abrasion quand ils se trouvent en contact avec les différents organes nécessaires pour fabriquer le fil, et également de lier les filaments entre eux.

Le fil précité peut être un fil sans torsion ou un fil retordu, par exemple avec une torsion de 0,4 à 1 tour par centimètre.

Le verre entrant dans la constitution des fils peut être de tout type, par exemple E, C, R, AR (alcali-résistant). On préfère le verre E.

Le diamètre des filaments de verre constituant les fils peut varier dans une large mesure, par exemple de 3 à 30 $\mu$m et de préférence de 5 à 20 $\mu$m. De la même manière, de larges variations peuvent survenir dans la masse linéique du fil qui peut aller de 10 à 100 tex et de préférence de 20 à 50 tex.

Le fil de verre peut être nu ou pourvu d'une couche à base d'un polymère, de préférence de même nature chimique que le polymère de la couche de revêtement contenant le silane de formule (I) conforme à l'invention.

Le fil de verre de l'invention est obtenu en appliquant ladite composition de revêtement sur le fil de verre précité par tout moyen connu de l'homme du métier, par exemple par imprégnation (« dip coating » en anglais), notamment par passage au travers d'une filière ou dans un bain, ou extrusion. De préférence, l'application est effectuée par passage au travers d'une filière, en faisant passer le fil dans une boucle alimentée avec la composition de revêtement, puis dans une enceinte chauffée, le fil étant finalement collecté sous la forme d'un enroulement. La température de l'enceinte varie selon la nature du polymère utilisé : elle est supérieure à la température de ramollissement du polymère et en tout état de cause est largement inférieure à la température de dégradation du polymère. Dans le cas du polychlorure de vinyle, la température varie de 100 à 250°C.

Le fil de verre obtenu est utilisé pour fabriquer des écrans sous forme de grilles, de tissus ou de tricots utilisables notamment en tant que moustiquaires.

De manière conventionnelle, on forme les grilles en superposant une première nappe de fils de verre parallèles orientés dans une direction et une deuxième nappe de fils de verre parallèles orientés dans une autre direction, de préférence dans des directions formant un angle généralement de l'ordre de 90°.

Les tissus et les tricots de fils de verre peuvent être obtenus par toute méthode connue de l'homme du métier.

Les grilles, les tissus et les tricots sont ensuite soumises à un traitement thermique qui vise à coller les fils au niveau de leurs points de contact ou d'intersection et par conséquent de consolider la grille. La température du traitement varie selon la nature du polymère, supérieure à la température de ramollissement et inférieure à la température de dégradation du polymère. Pour le polychlorure de vinyle, la température varie de 100 à 250°C.

Le cas échéant, une couche supplémentaire peut être appliquée sur la grille, le tissu ou le tricot, à partir d'un sol-gel tel que mentionné précédemment. Le sol-gel peut être appliqué par imprégnation, pulvérisation, au rouleau ou au rideau, suivi d'une étape de traitement thermique, par exemple dans une enceinte à air chaud ou sous une ou plusieurs lampes à rayonnement infrarouge.

Les grilles, les tissus et les tricots incorporant les fils de verre selon l'invention ont une masse surfacique qui varie dans une large mesure, par exemple de 50 à 300 $g/m^2$, de préférence 70 à 200 $g/m^2$.

L'écran conforme à l'invention peut être utilisé en tant que moustiquaire mais aussi store ou pare-soleil, disposé à l'intérieur ou à l'extérieur.

Les exemples qui suivent permettent d'illustrer l'invention sans toutefois la limiter.

## EXEMPLES 1 A 4

Dans un récipient, on verse 95 parts en poids d'un plastisol de PVC et 5 parts en poids du silane suivant :

- 3-glycidoxypropyltrimethoxysilane : exemple 1
- phényltriethoxysilane : exemple 2
- triethoxyfluorosilane : exemple 3.

Le plastisol de PVC utilisé comprend 66,5 % en poids de PVC et 33,5 % en poids d'un phtalate de butyle ou de benzyle.

La composition obtenue est déposée sur une plaque de verre au moyen d'un tire-film (épaisseur : 200 μm), puis la plaque est placée dans une étuve à 160°C pendant 5 minutes.

Dans les mêmes conditions, on dépose sur une plaque de verre une composition de PVC ne contenant pas de silane (Référence).

La plaque de verre est placée dans une enceinte climatique (40°C ; humidité relative : 95 %). Sur la plaque maintenue à la température ambiante, on dépose 3 μl d'eau et on mesure l'angle de contact au moyen d'un tensiomètre à différentes échéances. Les mesures sont rassemblées dans le tableau 1 suivant.

Tableau 1

| | Ex. 1 | Ex. 2 | Ex. 3 | Réf. |
|---|---|---|---|---|
| 0 jour | 83,5 | 90,8 | 92,8 | 79,7 |
| 1 jour | 55,0 | 72,5 | 58,1 | 75,0 |
| 4 jours | 36,0 | 72,4 | 47,5 | 71,2 |
| 6 jours | 24,7 | 66,3 | 43,8 | 68,0 |
| 11 jours | - | 53,6 | 39,1 | 67,9 |
| 14 jours | 19,6 | - | - | 67,7 |
| 34 jours | 23,3 | - | - | 66,5 |

On constate que les exemples 1 à 3 selon l'invention permettent de diminuer l'angle de contact c'est-à-dire d'avoir une surface plus hydrophile que la Référence.

**EXEMPLES 5 ET 6 (COMPARATIF)**

a) fabrication de l'écran de fils de verre

On fabrique en continu un fil de verre en faisant passer un fil de verre E, de masse linéique comprise entre 30 et 35 tex, dans un bain d'imprégnation contenant 95 parts en poids de plastisol de PVC et 5 parts en poids de 3-glycidoxypropyltrimethoxysilane conforme à l'exemple 1. Le fil de verre obtenu possède une masse linéique comprise entre 85 et 90 tex et l'épaisseur moyenne du revêtement de PVC est égale à 305 μm.

On fabrique de la même manière un fil de verre en utilisant un plastisol de PVC sans le silane précité (exemple 6 comparatif).

Avec le fil précité, on fabrique un tissu ayant une ouverture de maille moyenne de dimension égale à 1000 μm x 1500 μm. Le tissu est traité dans une étuve à 165°C pendant un temps suffisant pour fondre le PVC et après refroidissement fixer les fils aux points de croisement.

b) test de salissure de l'écran

Un échantillon carré (11 cm de côté) de l'écran obtenu sous a) est disposé au centre d'un chevalet incliné vers l'arrière d'un angle de 10° par rapport à la verticale. A 30 cm de l'échantillon, on place une buse de pulvérisation qui dispense un jet perpendiculaire (100 ml au total) à la surface de l'échantillon et sur la totalité de ladite surface.

La solution pulvérisée est représentative des salissures les plus couramment rencontrées. La solution est une solution hydroalcoolique (rapport volumique eau:ethanol:isopropan-2-ol 51:26,5:22,5) qui contient les composés suivants dans les concentrations ci-après, exprimées en g/l :

| | |
|---|---|
| - acide stéarique | 0,735 |
| - acide adipique | 2,940 |
| - graphite ($d_{50}$ = 2,5 μm) | 0,147 |

(suite)

| | |
|---|---|
| - nitrate de calcium | 0,235 |
| - nitrate de cuivre | 0,044 |
| - nitrate de zinc | 0,044 |
| - sulfate de potassium | 0,117 |
| - sulfate de sodium | 0,088 |
| - sulfate de calcium | 0,088 |
| - chlorure de sodium | 0,088 |

Sur chaque échantillon d'écran, on définit 6 zones de mesure (carré de 4 cm de côté chacun) sur lesquelles on mesure la surface correspondant à l'ouverture des mailles avant et après le test de salissure. La mesure est effectuée grâce à un traitement d'image par transformée de Fourrier qui procède par comptage des pixels blancs (surface propre) et des pixels noirs (surface salie). Le test est effectué sur 5 échantillons.

On calcule la perte de transparence, en pourcent, comme suit : suit :

$$(\text{nombre de pixels noirs/nombre total de pixels}) \times 100$$

Les résultats sont les suivants :

| | Ex. 5 | Ex. 6 (comp.) |
|---|---|---|
| Perte de transparence (%) | 4,8 | 23,8 |

**Revendications**

1. Fil de verre comprenant une couche de revêtement, **caractérisé en ce que** ladite couche comprend :

   - un polymère choisi dans le groupe constitué par les copolymères acétate de vinyle-chlorure de vinyle, polychlorure de vinyle et polychlorure de vinylidène, et
   - un silane de formule (I) suivante :

$$\begin{array}{c} R_2 \\ | \\ R_1 - Si - R_3 \\ | \\ R_4 \end{array} \qquad (I)$$

   dans laquelle

   • $R_1$, $R_2$, $R_3$, identiques ou différents, représentent

   - un groupement alkyle en $C_1$-$C_6$,
   - un groupement alcényle en $C_2$-$C_6$,
   - un groupement alcynyle en $C_2$-$C_6$,
   - un groupement aryle en $C_6$-$C_{10}$,
   - un groupement hydroxyle,
   - un groupement alkoxy en $C_1$-$C_6$,
   - un groupement aryloxy en $C_6$-$C_{10}$,
   - un groupement acyloxy en $C_1$-$C_6$,
   - un groupement alkylcarbonyle en $C_2$-$C_7$,

   au moins deux des groupements $R_1$, $R_2$, $R_3$ représentant un groupement hydroxyle ou un groupement alkoxy, et

   • $R_4$ représente

- un groupement renfermant au moins une fonction epoxy,
- un groupement aryle, éventuellement substitué,
- atome d'halogène ou un groupement portant au moins un atome d'halogène, notamment de fluor,
- un groupement renfermant au moins une fonction aldéhyde,
- un groupement portant au moins une fonction renfermant un atome de phosphore,
- un groupement acryloxy ou méthacryloxy,

ledit groupement portant les fonctions précitées étant un groupement carboné en $C_1$-$C_{18}$, de préférence $C_1$-$C_8$, pouvant contenir au moins hétéroatome d'oxygène.

**2.** Fil selon la revendication 1, **caractérisé en ce que** les groupements $R_1$, $R_2$ et $R_3$ sont choisis parmi les groupements méthyle, éthyle, méthoxy et éthoxy.

**3.** Fil selon la revendication 1 ou 2, **caractérisé en ce que** le groupement $R_4$ est :

- un groupement portant au moins une fonction epoxy en position terminale, notamment un groupement glycidoxyalkyle dans lequel le radical alkylène renferme 1 à 8 atomes de carbone, avantageusement le glycidoxypropyle,
- un groupement aryle, notamment phényle,
- un atome d'halogène ou une chaine aliphatique renfermant 1 à 9 atomes de carbone portant au moins un atome d'halogène, notamment de fluor.

**4.** Fil selon l'une des revendications 1 à 3, **caractérisé en ce que** le silane est le 3-glycidoxypropyl-méthyldimethoxysilane, le 3-glycidoxypropyltrimethoxysilane, le phényltriéthoxysilane et le triéthoxyfluorosilane.

**5.** Fil selon l'une des revendications 1 à 4, **caractérisé en ce que** le polymère est un polymère thermoplastique éventuellement à caractère élastomérique.

**6.** Fil selon l'une des revendications 1 à 5, **caractérisé en ce que** la couche de revêtement comprend en outre un plastifiant choisi parmi les esters d'acide organique, les phosphates et les huiles issues de coupes pétrolières.

**7.** Fil selon l'une des revendications 1 à 6, **caractérisé en ce qu'**il comprend en outre une couche supplémentaire se superposant à la couche de polymère choisie parmi les couches photocatalytiques, les couches antistatiques, les couches hydrophiles et les couches hydrophobes et/ou oléophobes.

**8.** Fil selon la revendication 7, **caractérisé en ce que** la couche photocatalytique contient des particules de $TiO_2$ sous forme anatase, de préférence dans une matrice de silice mésoporeuse.

**9.** Fil selon la revendication 7, **caractérisé en ce que** la couche antistatique est une couche d'ITO, une couche de $SnO_2$ dopée par un métal, notamment Sb, Nb, Ta ou W, et une couche de ZnO dopée ou non par Sn, Al, In, Y, Zr ou B, les couches à base d'une matrice polymère UV-réticulable ou thermoréticulable contenant des nanoparticules d'ITO.

**10.** Fil selon la revendication 7, **caractérisé en ce que** la couche hydrophile est à base de silice.

**11.** Fil selon la revendication 7, **caractérisé en ce que** la couche hydrophobe et/ou oléophobe est constituée d'une matrice (sous forme d'une couche ou de billes) de silice greffée par des composés fluorés, des alkylsilanes, des arylsilanes ou des hexaalkyldisilazanes.

**12.** Fil selon l'une des revendications 1 à 11, **caractérisé en ce que** la quantité de revêtement à base de polymère déposé sur le fil de verre représente 15 à 80 % du poids total du fil revêtu, de préférence 50 à 70 %, et avantageusement 55 à 65 %.

**13.** Fil selon l'une des revendications 1 à 12, **caractérisé en ce que** la quantité de silane déposé sur le fil de verre représente 0,5 à 15 % du poids total du fil revêtu, de préférence 1 à 10 % et avantageusement 3 à 7 %.

**14.** Ecran sous forme de grille, de tissu ou de tricot, **caractérisé en ce qu'**il est constitué de fils de verre selon l'une des revendications 1 à 13.

**15.** Ecran selon la revendication 14, **caractérisé en ce qu'**il présente une masse surfacique qui varie de 50 à 300 $g/m^2$, de préférence 70 à 200 $g/m^2$.

**16.** Utilisation de l'écran selon la revendication 14 ou 15 en tant que moustiquaire, store ou pare-soleil.

**Patentansprüche**

**1.** Glasfaser, umfassend eine Beschichtungsschicht, **dadurch gekennzeichnet, dass** die Schicht umfasst:

- ein Polymer, das aus der Gruppe ausgewählt ist, bestehend aus Vinylacetat-Vinylchlorid-, Polyvinylchlorid- und Polyvinylidenchlorid-Copolymeren, und
- ein Silan der folgenden Formel (I):

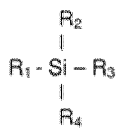

(I)

worin

• $R_1$, $R_2$, $R_3$, identisch oder verschieden, darstellen

- eine $C_1$-$C_6$-Alkylgruppe,
- eine $C_2$-$C_6$-Alkenylgruppe,
- eine $C_2$-$C_6$-Alkinylgruppe,
- eine $C_6$-$C_{10}$-Arylgruppe,
- eine Hydroxylgruppe,
- eine $C_1$-$C_6$-Alkoxygruppe,
- eine $C_6$-$C_{10}$-Aryloxygruppe,
- eine $C_1$-$C_6$-Acyloxygruppe,
- eine $C_2$-$C_7$-Alkylcarbonylgruppe,

mindestens zwei der Gruppen $R_1$, $R_2$, $R_3$ eine Hydroxylgruppe oder eine Alkoxygruppe darstellen, und

• $R_4$ darstellt

- eine Gruppe, die mindestens eine Epoxidfunktion enthält,
- eine Arylgruppe, die optional substituiert ist,
- ein Halogenatom oder eine Gruppe, die mindestens ein Halogenatom trägt, insbesondere Fluor,
- eine Gruppe, die mindestens eine Aldehydfunktion enthält,
- eine Gruppe, die mindestens eine Funktion trägt, die ein Phosphoratom enthält,
- eine Acryloxy- oder Methacryloxygruppe,

wobei die Gruppe, die die oben genannten Funktionen trägt, eine kohlenstoffhaltige $C_1$-$C_{18}$-Gruppe ist, vorzugsweise $C_1$-$C_8$, die mindestens ein Sauerstoffheteroatom beinhalten kann.

**2.** Faser nach Anspruch 1, **dadurch gekennzeichnet, dass** die Gruppen $R_1$, $R_2$ und $R_3$ aus Methyl-, Ethyl-, Methoxy- und Ethoxygruppen ausgewählt sind.

**3.** Faser nach Anspruch 1 oder 2, **dadurch gekennzeichnet, dass** die Gruppe $R_4$ ist:

- eine Gruppe, die mindestens eine Epoxidfunktion in endständiger Position trägt, insbesondere eine Glycidoxyalkylgruppe, wobei der Alkylenrest 1 bis 8 Kohlenstoffatome enthält, vorteilhafterweise Glycidoxypropyl,
- eine Arylgruppe, insbesondere Phenyl,
- ein Halogenatom oder eine aliphatische Kette, die 1 bis 9 Kohlenstoffatome enthält, die mindestens ein Halogenatom trägt, insbesondere Fluor.

**4.** Faser nach einem der Ansprüche 1 bis 3,

**dadurch gekennzeichnet, dass** das Silan 3-Glycidoxypropylmethyldimethoxysilan, 3-Glycidoxypropyltrimethoxysilan, Phenyltriethoxysilan und Triethoxyfluorsilan ist.

5. Faser nach einem der Ansprüche 1 bis 4,
**dadurch gekennzeichnet, dass** das Polymer ein thermoplastisches Polymer ist, optional von elastomerer Natur.

6. Faser nach einem der Ansprüche 1 bis 5,
**dadurch gekennzeichnet, dass** die Beschichtungsschicht ferner einen Weichmacher umfasst, der aus Estern organischer Säuren, Phosphaten und Ölen aus Erdölfraktionen ausgewählt ist.

7. Faser nach einem der Ansprüche 1 bis 6,
**dadurch gekennzeichnet, dass** sie ferner eine zusätzliche Schicht umfasst, die über der Polymerschicht liegt und aus photokatalytischen Schichten, antistatischen Schichten, hydrophilen Schichten und hydrophoben und/oder oleophoben Schichten ausgewählt ist.

8. Faser nach Anspruch 7, **dadurch gekennzeichnet, dass** die photokatalytische Schicht $TiO_2$-Partikel in Anatasform beinhaltet, vorzugsweise in einer mesoporösen Silicamatrix.

9. Faser nach Anspruch 7, **dadurch gekennzeichnet, dass** die antistatische Schicht eine ITO-Schicht, eine $SnO_2$-Schicht, die mit einem Metall dotiert ist, insbesondere Sb, Nb, Ta oder W, und eine ZnO- Schicht ist, die mit Sn, Al, In, Y, Zr oder B dotiert ist oder nicht, wobei die Schichten auf Basis einer UVvernetzbaren oder thermisch vernetzbaren Polymermatrix sind, die ITO-Nanopartikel beinhaltet.

10. Faser nach Anspruch 7, **dadurch gekennzeichnet, dass** die hydrophile Schicht auf Basis von Kieselsäure ist.

11. Faser nach Anspruch 7, **dadurch gekennzeichnet, dass** die hydrophobe und/oder oleophobe Schicht aus einer Matrix (in Form einer Schicht oder von Kugeln) aus Siliciumdioxid, das mit fluorierten Verbindungen gepfropft ist, Alkylsilanen, Arylsilanen oder Hexaalkyldisilazanen besteht.

12. Faser nach einem der Ansprüche 1 bis 11,
**dadurch gekennzeichnet, dass** die Menge der Beschichtung auf Basis von Polymer, die auf die Glasfaser abgeschieden ist, 15 bis 80 % des Gesamtgewichts der beschichteten Faser darstellt, vorzugsweise 50 bis 70 % und vorteilhafterweise 55 bis 65 %.

13. Faser nach einem der Ansprüche 1 bis 12,
**dadurch gekennzeichnet, dass** die Menge des Silans, das auf die Glasfaser abgeschieden ist, 0,5 bis 15 % des Gesamtgewichts der beschichteten Faser darstellt, vorzugsweise 1 bis 10 % und vorteilhafterweise 3 bis 7 %.

14. Abschirmung in Form eines Gitters, Gewebes oder Gestricks,
**dadurch gekennzeichnet, dass** sie aus Glasdrähten nach einem der Ansprüche 1 bis 13 besteht.

15. Abschirmung nach Anspruch 14, **dadurch gekennzeichnet, dass** sie ein Flächengewicht aufweist, das von 50 bis 300 $g/m^2$, vorzugsweise von 70 bis 200 $g/m^2$, variiert.

16. Verwendung der Abschirmung nach Anspruch 14 oder 15 als Moskitonetz, Rollo oder Sonnenblende.

**Claims**

1. A glass strand comprising a coating layer, **characterized in that** said layer comprises:

   - a polymer chosen from the group consisting of vinyl acetate/vinyl chloride copolymers, polyvinyl chloride and polyvinylidene chloride, and
   - a silane of following formula (I):

$$
\begin{array}{c} R_2 \\ | \\ R_1 - Si - R_3 \\ | \\ R_4 \end{array} \qquad (I)
$$

in which:

• $R_1$, $R_2$ and $R_3$, which are identical or different, represent:

- a $C_1$-$C_6$ alkyl group,
- a $C_2$-$C_6$ alkenyl group,
- a $C_2$-$C_6$ alkynyl group,
- a $C_6$-$C_{10}$ aryl group,
- a hydroxyl group,
- a $C_1$-$C_6$ alkoxy group,
- a $C_6$-$C_{10}$ aryloxy group,
- a $C_1$-$C_6$ acyloxy group,
- a $C_2$-$C_7$ alkylcarbonyl group,

at least two of the $R_1$, $R_2$ and $R_3$ groups representing a hydroxyl group or an alkoxy group, and
• $R_4$ represents:

- a group including at least one epoxy functional group,
- an optionally substituted aryl group,
- a halogen atom or a group carrying at least one halogen atom, in particular a fluorine atom,
- a group including at least one aldehyde functional group,
- a group carrying at least one functional group including a phosphorus atom,
- an acryloyloxy or methacryloyloxy group,

said group carrying the abovementioned functional groups being a $C_1$-$C_{18}$, preferably $C_1$-$C_8$, carbon-based group which can comprise at least one oxygen heteroatom.

2. The strand as claimed in claim 1, **characterized in that** the $R_1$, $R_2$ and $R_3$ groups are chosen from the methyl, ethyl, methoxy and ethoxy groups.

3. The strand as claimed in claim 1 or 2, **characterized in that** the $R_4$ group is:

- a group carrying at least one epoxy functional group in the end position, in particular a glycidoxyalkyl group in which the alkylene radical includes from 1 to 8 carbon atoms, advantageously glycidoxypropyl,
- an aryl group, in particular a phenyl group,
- a halogen atom or an aliphatic chain including from 1 to 9 carbon atoms carrying at least one halogen atom, in particular a fluorine atom.

4. The strand as claimed in one of claims 1 to 3, **characterized in that** the silane is 3-glycidoxypropylmethyldimethoxysilane, 3-glycidoxypropyltrimethoxysilane, phenyltriethoxysilane and triethoxyfluorosilane.

5. The strand as claimed in one of claims 1 to 4, **characterized in that** the polymer is a thermoplastic polymer optionally having an elastomeric nature.

6. The strand as claimed in one of claims 1 to 5, **characterized in that** the coating layer additionally comprises a plasticizer chosen from organic acid esters, phosphates and oils resulting from petroleum fractions.

7. The strand as claimed in one of claims 1 to 6, **characterized in that** it additionally comprises an additional layer which is superimposed on the polymer layer chosen from photocatalytic layers, antistatic layers, hydrophilic layers and hydrophobic and/or oleophobic layers.

8. The strand as claimed in claim 7, **characterized in that** the photocatalytic layer comprises $TiO_2$ particles in anatase form, preferably in a matrix of mesoporous silica.

9. The strand as claimed in claim 7, **characterized in that** the antistatic layer is an ITO layer, an $SnO_2$ layer doped with a metal, in particular Sb, Nb, Ta or W, a ZnO layer which is or is not doped with Sn, Al, In, Y, Zr or B, or a layer based on a UV-crosslinkable or heat-crosslinkable polymer matrix comprising ITO nanoparticles.

10. The strand as claimed in claim 7, **characterized in that** the hydrophilic layer is based on silica.

11. The strand as claimed in claim 7, **characterized in that** the hydrophobic and/or oleophobic layer is composed of a matrix (in the form of a layer or of beads) of silica grafted with fluorinated compounds, alkylsilanes, arylsilanes or hexaalkyldisilazanes.

12. The strand as claimed in one of claims 1 to 11, **characterized in that** the amount of polymer-based coating deposited on the glass strand represents from 15 to 80% of the total weight of the coated strand, preferably from 50 to 70% and advantageously from 55 to 65%.

13. The strand as claimed in one of claims 1 to 12, **characterized in that** the amount of silane deposited on the glass strand represents from 0.5 to 15% of the total weight of the coated strand, preferably from 1 to 10% and advantageously from 3 to 7%.

14. A screen in the form of a grid, woven fabric or knitted fabric, **characterized in that** it is composed of glass strands as claimed in one of claims 1 to 13.

15. The screen as claimed in claim 14, **characterized in that** it exhibits a weight per unit area which varies from 50 to 300 $g/m^2$ and preferably from 70 to 200 $g/m^2$.

16. The use of the screen as claimed in claim 14 or 15 as mosquito net, blind or sun screen.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- CN 2237104 Y
- US 20040224147 A1
- EP 0170981 A1
- FR 2908137 A1
- US 3922466 A